**Europäisches Patentamt**

**European Patent Office**

**Office européen des brevets**

(19)

(11) Veröffentlichungsnummer: **0 162 994**

**A1**

(12) # EUROPÄISCHE PATENTANMELDUNG

(21) Anmeldenummer: **84730060.5**

(22) Anmeldetag: **30.05.84**

(51) Int. Cl.⁴: **H 04 B 9/00**
**H 04 Q 11/04, H 04 Q 3/52**

(43) Veröffentlichungstag der Anmeldung:
**04.12.85 Patentblatt 85/49**

(84) Benannte Vertragsstaaten:
**AT BE CH DE FR GB IT LI LU NL SE**

(71) Anmelder: **Heinrich-Hertz-Institut für**
**Nachrichtentechnik Berlin GmbH**
**Einsteinufer 37**
**D-1000 Berlin 10(DE)**

(72) Erfinder: **Kreutzer, Heinrich W., Dipl.-Ing.**
**Marienplatz 8**
**D-1000 Berlin 45(DE)**

(72) Erfinder: **Hermes, Thomas, Dr.-Ing.**
**Helmholtzstrasse 26**
**D-1000 Berlin 10(DE)**

(72) Erfinder: **Heydt, Günter, Dipl.-Ing.**
**Steilpfad 35**
**D-1000 Berlin 27(DE)**

(74) Vertreter: **Wolff, Konrad**
**Heinrich-Hertz-Institut für Nachrichtentechnik Berlin**
**GmbH Einsteinufer 37**
**D-1000 Berlin 10(DE)**

(54) **Lokales Kommunikationssystem mit einem Sternnetz.**

(57) Lokale Kommunikationssysteme gibt es für unterschiedliche Dienste. In privaten Nebenstellenanlagen steht "Fernsprechen" im Vordergrund. Verteilte Rechner kommunizieren über Datenbusse. Noch weitgehend ungeklärt ist die Realisierung oder Einbeziehung von Breitbanddiensten sowie der Einsatz der optischen Nachrichtentechnik zumindest in Teilen eines derartigen Systems.

Ein Lokales Kommun kationssystem gemäß der Erfindung ist für optische und/oder elektrische Kanäle ausgelegt und bietet ausreichende Flexibilität, um branchenspezifische Anforderungen an einzelne Dienste weitgehend zu erfüllen und dennoch die Diensteintegration zu fördern. Die zwischen den Teilnehmerstationen (4) befindlichen Komponenten sind im wesentlichen passiv. Das Netz ist in Sternstruktur (1) ausgelegt. Der schmal- und mittelbandige Verkehr wird in einem vollsynchronen Zeitmultiplexsystem mit wahlfreiem Zugriff und schneller Leitungsvermittlung abgewickelt. Bei einer an sich davon getrennten Führung von Breitbanddiensten (10) erfolgt deren Signalisierung wie bei Schmalbanddiensten. Ein unbefugter Zugriff auf Zeitschlitze läßt sich durch zusätzliche Maßnahmen verhindern.

./...

F i g.1

HEINRICH-HERTZ-INSTITUT FÜR NACHRICHTENTECHNIK BERLIN
GMBH                                          01/0584 EP

Lokales Kommunikationssystem mit einem Sternnetz

Die Erfindung bezieht sich auf ein lokales Kommunikationssystem - LKS - der im Oberbegriff des Patentanspruches 1 angegebenen Art, wie es insoweit auch dem Inhalt der Patentanmeldung EP 84 730 052.2 zu entnehmen ist.

Als "Lokales Kommunikationssystem - LKS" werden sehr unterschiedliche Systeme bezeichnet, die sich zudem in schneller Weiterentwicklung befinden. So wird dieser Begriff beispielsweise im Bereich privater Nebenstellenanlagen verwendet. Dort steht der Dienst "Fernsprechen" im Vordergrund, für den eine zentrale digitale Vermittlungstechnik auf der Basis des 64 kbit/s-Kanal entsteht. Wird ein schneller Verbindungsaufbau in ca. 5 ms oder weniger eingeführt, läßt sich eine Fülle weiterer Schmalbanddienste in solchen Nebenstellenanlagen abwickeln.

Als Lokales Kommunikationssystem werden aber auch lokale Datenübertragungsanlagen bezeichnet. Sie unterscheiden sich von Fernsprech-Nebenstellenanlagen durch die Übertragungsrate (derzeit einige Mbit/s), teilnehmerzugeordnete Steuerungen, Paketvermittlung usw. In der Regel fallen dort die zu übermittelnden Daten in verhältnismäßig geringem Umfang und in sehr unregelmäßigen Abständen an.

Die nachfolgend aufgeführten, eine begrenzte Auswahl repräsentierenden Veröffentlichungen spiegeln den derzeitigen Stand der Entwicklung optischer Kommunikationssysteme wieder. Aus "Siemens Forsch.-u.Entwickl.-Ber." Bd. 9 (1980) Nr. 1 Seiten 32 bis 37 ist bekannt, unter welchen Voraussetzungen Sternkoppler-Konfigurationen für Lichtwellenleiter-Bussysteme in einer verteilten Multimikrocomputerstruktur zum Einsatz kommen können. Einen weiteren Überblick zu optischen Datenbussen in verteilten Rechner-Systemen bietet "Optische Informationsübertragung mit Lichtwellenleitern", VDE-Verlag Berlin 1982 (Kontakt & Studium Bd. 96), dort Kapitel 8, Seiten 119 bis 144. Das sich dort anschließende Kapitel 9, Seiten 145 bis 173, befaßt sich mit der digitalen und analogen optischen Breitband-Übertragungstechnik. Eine weitere Darstellung von lokalen Kommunikationssystemen auf der Basis der Technologie für faseroptische Kommunikation findet sich in "Siemens Forsch.-u.Entwickl.-Ber." Bd. 12 (1983) Nr. 1, Seiten 3 bis 10. Über ein digitales integriertes Netz, insbesondere dessen Komponenten, Struktur und Organisation des Systems wurde anläßlich des "1978 International Zurich Seminar on Digital Communication", 7./9.März 1978 - s. "Proceedings", S. B 7.1 bis B 7.6 - berichtet.

Hieraus läßt sich folgende Tendenz ablesen: Für einige Anwendungsbereiche liegen zahlreiche Vorschläge bzw. sogar marktfähige Systeme vor. Zukunftssichere Systeme beruhen auf optischer Nachrichten- oder Datenübertragung. Die Einbeziehung von Diensten aller Kategorien, d.h. von Schmal-, Mittel- und Breitbanddiensten in ein Lokales Kommunikationssystem ist aber noch weitgehend ungeklärt.

Die oben genannte ältere Anmeldung EP 84 730 052.2 ist streng auf die zukünftige optische Nachrichtentechnik ausgerichtet und geht davon aus, daß ein solches System große Flexibilität aufweisen muß, um die sehr heterogenen Voraussetzungen, d. h. die Vielzahl branchenspezifischer Anforderungen, erfüllen zu können. Dem entsprechend wird dort für ein System mit optischen Kanälen zur Lösung ein vollsynchrones Zeitmultiplexsystem mit wahlfreiem Zugriff (TDMA-System) und einer maximalen Datenrate im Gbit/s-Bereich für die integrierte Abwicklung mit schneller Leitungsvermittlung von unterschiedlichen Diensten, d. h. Schmalbanddiensten mit einem Bandbreitenbedarf bis 64 kbit/s und Mittelbanddiensten mit einem Bandbreitenbedarf weit über 64 kbit/s sowie gegebenenfalls zumindest einer schmalbandigen Signalisierung bei Breitbanddiensten vorgeschlagen.

Die Bedeutung der elektrischen Nachrichtentechnik wird sich ohne Zweifel mit fortschreitender Entwicklung optischer Komponenten und Systeme verändern, wahrscheinlich geringer werden; eine Verdrängung oder völlige Ablösung durch die optische Nachrichtentechnik ist ohnehin nicht in allen Bereichen möglich und vollzieht sich keinesfalls überstürzt oder schlagartig. Die Erfahrung zeigt überdies, daß sich ziemlich weit in die Zukunft gerichtete Vorschläge häufig vorteilhaft auf herkömmliche Lösungen auswirken, d. h. dort zu Verbesserungen führen.

Die Erfindung geht deshalb davon aus, daß zumindest für eine Übergangszeit ein Interesse an Systemen besteht, deren Funktionsweise, Dienstespektrum und dergleichen im Hinblick auf konkurrierende neuartige Entwicklungen diesen weitgehend angeglichen werden, sich aber mit herkömmlichen, gegebenenfalls verbesserten Mitteln, im vorliegenden Fall also weiterhin mit Verfahren und Einrichtungen der elektrischen Übertragungs- und Vermittlungstechnik, sowie mit hybriden, im vorliegenden Fall also gemischt optisch und elektrischen Systemen, realisieren lassen.

Im kennzeichnenden Teil des Patentanspruches 1 sind die Merkmale der erfindungsgemäßen Lösung für diese Aufgabe angegeben. Der Unterschied gegenüber einem Lokalen Kommunikationssystem, das der älteren Anmeldung EP 84 730 052.2 entspricht, besteht also in der Hauptsache darin, daß zur Realisierung derselben Funktionen hier weitgehend bis ausschließlich elektrische Systeme, Komponenten und Einrichtungen zum Einsatz kommen können, während dort, bis auf unverzichtbare Elektronik in Teilnehmerstationen und dergleichen, ein System mit Übertragung und Vermittlung der Nachrichten im optischen Bereich als Voraussetzung anzusehen ist.

Unter Berücksichtigung dieses Unterschiedes können für die Beurteilung des vorliegenden und des der genannten älteren Anmeldung zu entnehmenden Lokalen Kommunikationssystems im übrigen dieselben Voraussetzungen zugrundegelegt werden. Die entsprechenden Schlußfolgerungen fallen im vorliegenden Fall sicherlich nicht ungünstiger aus als bezüglich der Lösung mit nur optischen Kanälen. Dies gilt beispielsweise für die Realisierung eines elektrischen Sternkopplers, einer zentralen Einrichtung mit ODER-Funktion und gegenenfalls Treibern oder Verstärkern an den einzelnen Anschlußleitungen.

Die einzelnen Merkmale der erfindungsgemäßen Lösung sind für sich genommen zweifellos in diesem oder jenem Zusammenhang bereits bekannt. Dies ist durchaus gewollt, da eingeführte und bewährte Techniken nicht unnötig aufgegeben werden sollen. Da es aber für die integrierte Abwicklung von unterschiedlichen Diensten schlechthin nicht möglich ist, es überall bei den bisherigen Konzepten zu belassen, muß ein Mindestmaß solcher Details vorgegeben werden, die einheitlich für die verschiedenen Dienste zur Anwendung kommen können. So ist beispielsweise für den Dienst "Fernsprechen" ein vollsynchrones Zeitmultiplexsystem nicht ungewöhnlich. Allein dafür würde man wohl aber Datenraten bis in den Gbit/s-Bereich, zumal in einem Lokalen Kommunikationssystem, nicht vorsehen. Weiterhin sind im Bereich privater Nebenstellenanlagen zwar Sternnetze weit verbreitet, nicht jedoch solche mit optischen und/oder elektrischen Kanälen, für die die einzelnen Teilnehmerstationen für die Sende- und die Empfangsrichtung über getrennte, in einem zentralen optischen bzw. elektrischen Sternkoppler zusammengeführte optische und/oder elektrische Anschlußleitungen miteinander verbunden und mit solchen Komponenten ausgerüstet sind, die für den Zugriff auf einen Kanal benötigt werden.

Merkmale wie Sternnetz, optische und/oder elektrische Kanäle, voneinander getrennte Anschlußleitungen für die Sende- und die Empfangsrichtung, deren Zusammenführung in einem zentralen optischen bzw. elektrischen Sternkoppler sowie gegebenenfalls die Ausrüstung der angeschlossenen Stationen mit solchen Komponenten, die zur elektrisch-optischen bzw. optisch-elektrischen Signalumwandlung und für den Zugriff auf einen Kanal benötigt werden, sind - zumindest teilweise - von Rechnersystemen her bekannt. Dafür sind dort vollsynchrone Zeitmultiplexsysteme, wahlfreier Zugriff, schnelle Leitungsvermittlung sowie auch Datenraten bis in den Gbit/s-Bereich weder für elektrische noch für optische Übertragung und Vermittlung gebräuchlich.

Bezüglich der Breitbanddienste sind, wie eingangs schon erwähnt, viele Einzelheiten nicht geklärt. Die optische Übertragung ist beherrschbar, sowohl in analoger als auch in digitaler Technik. Deren Vermittlung erfolgt, wenn überhaupt, bisher in Form elektrischer Signale. Ein auf dem Heterodyn-Prinzip beruhendes Konzept - siehe EP - A1 0 077 292 (Erfinder: Strebel, B.; Bachus, E.-J.) - erfordert in jedem Fall Monomodefasern und -Koppler. Bei einem größeren Angebot an Breitbanddiensten sollte zumindest deren schmalbandige Signalisierung im selben Netz mit den Schmal- und Mittelbanddiensten durchgeführt werden. Bei Ausführungsformen der Erfindung wird deshalb vom zentralen Sternkoppler zumindest der leere Zeitmultiplexrahmen und die Signalisierung aller integrierten Dienste an die angeschlossenen Teilnehmer- bzw. Überwachungs-/Steuer-Stationen weiter geleitet.

In Bezug auf Mittelbanddienste, im wesentlichen also Datenübermittlung für Rechner, stellt ein vollsynchrones Zeitmultiplexsystem mit wahlfreiem Zugriff und schneller Leitungsvermittlung einen beachtlichen Gegensatz zu der dort bisher üblichen Paketvermittlung dar. Selbstverständlich ist hierbei eine schnelle Leitungsvermittlung, also eine Durchschaltung einer Punkt-zu-Punkt-Verbindung in etwa 5 ms oder weniger, von besonderer Bedeutung. In Anbetracht dessen, daß bei einer schnellen TDMA-Vermittlung keine Paketverluste auftreten, die für Sprach-, Ton- und Bewegtbildsignale ohnehin nicht akzeptiert werden könnten, dürfte eine solche, für Datenverkehr an sich bisher unübliche Vermittlungstechnik, auch hier von Vorteil sein.

Bei bevorzugten Ausführungsformen der Erfindung ist ein Generator - als solcher an sich bekannt - vorgesehen, der einen leeren Zeitrahmen erzeugt und diesen über eine Sendeleitung in den zentralen Sternkoppler einspeist. Aus Sicherheitsgründen sollten dieser Sync.-Generator und der zentrale Sternkoppler örtlich möglichst eng benachbart sein. Im Prinzip kann die Generierung und Einspeisung des leeren Zeitrahmens aber auch von einer entsprechend ausgerüsteten Teilnehmerstation wahrgenommen werden.

Kennzeichnend, und für Signale im optischen Bereich wichtiger als im elektrischen Bereich, wo eine Zwischenspeicherung von digitalen Signalen leicht möglich ist, sind für eine weitere Ausführungsform der Erfindung Zeitschlitze des Zeitmultiplexrahmens mit Schutzzonen am Anfang und am Ende. Hierdurch wird zwar die für die eigentliche Nachricht nutzbare Übertragungskapazität verringert, aber verhindert, daß in zwei benachbarten Zeitschlitzen, die von verschiedenen Teilnehmerstationen in den zentralen Sternkoppler gesendet werden, bei ungenauer Synchronisierung sich Zeitschlitzinhalte gegenseitig zerstören. Eine solche Schutzzone kann beispielsweise am Anfang eines Zeitschlitzes für die Dauer von wenigen, d. h. ein, zwei oder drei Bits vor einem Startbit, am Ende nach einem Stopbit ebenso wenigen Bits entsprechend, gebildet werden.

An dieser Stelle soll kurz auf die Synchronisierung einer Teilnehmerstation eingegangen werden. Hierzu sendet sie an sich selbst in einem freien Zeitschlitz ein Prüfwort aus. Sie empfängt dieses Prüfwort nach der doppelten Laufzeit (2 mal einfache Entfernung bis zum zentralen Sternkoppler). Die Teilnehmerstation braucht ihren Sendezeitpunkt nur so zu verschieben, bis das Prüfwort zeitlich richtig, bezogen auf das Synchronisierwort des herrschenden Zeitrahmens, empfangen wird. Sind Synchronisierwort und Prüfwort im empfangenen Zeitrahmen im richtigen Abstand, so sind sie es auch im Sternkoppler und damit auch bei der Aussendung. Da der Synchronismus auch im Betriebszustand leicht überwacht werden kann, benötigt man für die oben genannten Schutzzonen in einem Zeitschlitz tatsächlich nur sehr wenige Leerbits.

Einen besonderen Vorteil bieten Ausführungsformen der Erfindung mit einer beliebig wählbaren Bitrate innerhalb des Nutzbereichs eines Zeitschlitzes. Eine Variante dazu bilden Kanäle erhöhter, jeweils aus mehreren Zeitschlitzen innerhalb eines Rahmens gebildeter Datenrate. Endeinrichtungen für die verschiedenen Dienste brauchen also nicht auf dieselbe Bitrate ausgelegt zu sein. Während der Aufbauphase einer Punkt-zu-Punkt-Verbindung signalisieren sich die betreffenden Teilnehmerstationen, mit welcher Bitrate sie ihre Nachrichten oder Daten für die vorhandenen Endgeräte des betreffenden Dienstes senden bzw. empfangen können. Hierdurch wird also eine nicht unbeachtliche Flexibilität erreicht, die der Aufgabenstellung für die Erfindung zugrunde liegt. Die Art der Daten und deren Struktur, insbesondere die für sie gewählte Modulation oder Kodierung, innerhalb des Nutzbereichs eines Zeitschlitzes ist bei Ausführungsformen der Erfindung ohnehin nicht fest vorgegeben, d. h. Lokale Kommunikationssysteme entsprechend der Erfindung sind diesbezüglich transparent.

Insbesondere bei Ausführungsformen der hier erläuterten Erfindung wird aus wirtschaftlichen Gründen und im Hinblick auf Änderungs- und Erweiterungsmöglichkeiten oder höhere Ausbaustufen Lokaler Kommunikationssysteme eine getrennte Führung der Breitband- und der übrigen Dienste vorgesehen sein. Koaxialkabel oder dergleichen können zwar z. B. im Frequenzmultiplex betrieben werden und für Breitbandsignale im optischen Bereich kommen beispielsweise gesonderte Lichtwellenleiter oder auch die Wellenlängenmultiplextechnik in Betracht. Insoweit ist es auch für Ausführungsformen der Erfindung vorteilhaft, ein eigenes transparentes elektrisches bzw. optisches Koppelfeld mit einer Raumstufe für die Durchschaltung von Breitbanddiensten vorzusehen. Zeitstufen oder Zeit-/Raum-Stufen in Koppelfeldern müssen taktabhängig geschaltet werden. Da dies der Idee des transparenten Kanals entgegensteht, muß ein Koppelfeld in einem Lokalen Kommunikationssystem, das die gewünschte Flexibilität aufweisen soll, als reine Raumstufe ausgebildet sein. Zur Realisierung eines derartigen elektrischen Koppelfeldes stehen handelsübliche Bauelemente bzw. Schaltungen zur Verfügung.

Zweckmäßig für den Aufbau eines optischen Koppelfeldes sind optische Schalter in LiNbO$_3$-Technik. Derartige optische Schalter lenken durch ein angelegtes elektrisches Feld die Lichtwelle um, wirken also im Prinzip wie eine Weiche oder Abzweigung.

Sie lassen sich, wenn auch nicht in beliebigem. Umfang, kaskadieren, so daß von einem Eingang eines Koppelfeldes aus mehrere Ausgänge erreichbar sind. Sofern ein ausreichend großes Koppelfeld mit derartigen optischen Schaltern nicht verfügbar ist, können bei Ausführungsformen der Erfindung auch mehrere kleinere Koppelfelder und mehrere Wellenlängen für die Übertragung von Breitbanddiensten vorgesehen werden. Während der im Schmalbandsystem stattfindenden Signalisierung für eine Breitband-Punkt-zu-Punkt-Verbindung findet dann hierfür eine entsprechende Zuweisung der zu benutzenden Wellenlänge und des einzuschaltenden Koppelfeldes statt.

Aus den bisherigen Erläuterungen ist zu entnehmen, daß die Vermittlung in einem Lokalen Kommunikationssystem gemäß der Erfindung im wesentlichen dezentral erfolgt. Dazu sind die Teilnehmerstationen mit solchen Komponenten ausgerüstet, die für den Zugriff auf einen Kanal benötigt werden. Bei bislang bekanntgewordenen Systemen mit dezentraler Vermittlung werden häufig Eigenschaften der verwendeten Netzstruktur und des Vermittlungsprinzips zur Beurteilung des einen - d.h. der Netzstruktur - und des anderen - d.h. der dezentralen Vermittlungstechnik - in unzulässiger Weise miteinander verknüpft. Eine dezentrale Vermittlung erfordert beispielsweise, den Summenverkehr allen angeschlossenen Teilnehmerstationen zuzuführen. Hierfür scheinen Ring- oder Linien-Strukturen für das Netz geeigneter zu sein als ein Sternnetz. Sicherheitsüberlegungen führen demgegenüber zu einer Sternstruktur. Hierbei sind wiederum höhere Kabellängen pro Teilnehmer nötig als bei Ringstruktur.

Bei der Erfindung sind für die Festlegung auf ein Sternnetz und einen dezentral gesteuerten Zugriff auf die Kanäle folgende Gründe ausschlaggebend:

- Bei einem Lokalen Kommunikationssystem sind die zu überbrückenden Entfernungen gering. Kabel- und Kabelverlegungskosten spielen also eine untergeordnete Rolle. Auswirkungen eines Kabelbruchs oder eines ähnlichen Defekts sind in Sternnetzen am geringsten.

- Die Option auf optische Nachrichtentechnik für die Übertragung und die Vermittlung bedeutet, eine Signalumwandlung in den elektrischen Bereich kann, und sollte deshalb auch, möglichst nur im Bereich der Teilnehmerstationen erfolgen. Ausnahmen, die diese Regel bestätigen, sind deshalb auf zentrale Einrichtungen für Überwachungs-, Steuerungs- und ähnliche Aufgaben zu beschränken.

- Damit ergibt sich ein System mit dezentraler Vermittlung, d.h. die einzelnen Teilnehmerstationen müssen so autonom ausgerüstet sein, daß sie von sich aus auf einen benötigten Kanal zugreifen können.

Aus dieser Konsequenz folgt allerdings ein Problem, das ebenfalls gelöst werden muß, nämlich die Verhinderung eines unberechtigten Zugriffs auf einen Kanal, sowohl im Hinblick auf Abhörsicherheit als auch auf Störung von fremden Kanälen bzw. des gesamten Systems. Hierzu ist naturgemäß ein gewisser Aufwand erforderlich, der sich jedoch gemäß einer weiteren vorteilhaften Ausführungsform der Erfindung auf Schalter an den Anschlußleitungen für die Sende- und die Empfangsrichtung am zentralen Sternkoppler und auf eine als Überwachungseinrichtung für den Belegungszustand der Kanäle ausgebildete Station beschränkt, die diese Schalter dem Belegungszustand entsprechend steuert. Aufgrund dieser Maßnahmen ist es also möglich, nur den jeweiligen Teilnehmerstationen die ihnen zugeordneten Zeitschlitze, sowohl in der Sende- als auch in der Empfangsrichtung, durchzulassen. Signalisierungen können alle angeschlossenen Teilnehmerstationen über einen - oder mehrere - ständig für diesen Zweck freigegebene(n) Zeitschlitz(e) in den zentralen Sternkoppler absetzen. Von dort aus kann dann die Überwachungseinrichtung nach Art einer zentralen Vermittlungssteuerung für die Durchschaltung der gewünschten Punkt-zu-Punkt-Verbindungen sorgen.

Selbstverständlich sind hierzu weitergehende, auf demselben Grundprinzip beruhende Alternativen möglich. Beispielsweise ist jeder Teilnehmerstation auf der Empfangsleitung das Synchronisierzeichen zuzuführen. Dementsprechend ist ein Schalter an der Anschlußleitung für die Empfangsrichtung so zu steuern, daß einerseits - wie oben - ein einer Teilnehmerstation spezifisch zugeordneter Zeitschlitz, dazu ein allgemein allen Teilnehmerstationen zugeordneter Zeitschlitz, nämlich das Synchronisierzeichen, und andererseits in den verbleibenden Zeitschlitzen weitere Synchronisierzeichen zugeführt werden. Auf diese Weise empfängt eine Teilnehmerstation nur die für sie selbst bestimmten, individuellen und geheim bleibenden Nachrichten, während Nachrichten in anderen Kanälen, die für andere Teilnehmerstationen bestimmt sind, bei ihr nicht mehr eintreffen bzw. infolge Nebensprechen möglicherweise an sie gelangende, fremde Nachrichten von einem Synchronisierzeichen überdeckt werden.

Speziell auf ein Sternkoppler-TDMA-System gemäß der Erfindung angepaßt ist eine weitere Alternative. Die Schalter zwischen den Anschlußleitungen und dem Sternkoppler lassen dabei natürlich auf den Empfangsleitungen den Zeitschlitz mit dem Synchronisierzeichen sowie alle leeren, d.h. nicht belegten Zeitschlitze, in beiden Richtungen durch. Wird ein Zeitschlitz für eine Punkt-zu-Punkt-Verbindung belegt, werden für die Dauer eines solchen Zeitschlitzes die Schalter an den Empfangs- und Sendeleitungen aller anderen, an dieser Verbindung nicht beteiligten Teilnehmerstationen geöffnet bzw. an den Empfangsleitungen auf einen Besetztzeichen-Generator umgeschaltet. Diese Alternative liegt wieder näher am Prinzip der dezentralen Vermittlung, gewährleistet dennoch volle Abhörsicherheit und ermöglicht weiterhin, Urheber von Störungen in kürzester Zeit zu lokalisieren und diese sodann vom System abzuschalten. Dies sei anhand eines Beispiels näher erläutert: Hierzu wird zunächst angenommen, der Zeitmultiplexrahmen sei noch völlig leer, d.h. alle Teilnehmerstationen empfangen das Synchronisierzeichen, senden aber nicht. Alle Teilnehmerstationen haben jetzt die Möglichkeit, auf einen beliebigen Zeitschlitz zuzugreifen. Eine Signalisierung der Teilnehmerstation A an die Teilnehmerstation B wird von allen Teilnehmerstationen und der als Überwachungseinrichtung ausgebildeten Station empfangen. Ebenso verläuft die Rückmeldung, wobei diese in einem zweiten Zeitschlitz von jeder beliebigen Teilnehmerstation, die vom Berechtigten als Teilnehmerstation B definiert worden ist (Rufumlenkung), ausgesendet werden kann. Nunmehr öffnet die Überwachungsein-

richtung die Schalter an den Sendeleitungen aller anderen Teilnehmerstationen für die Dauer dieses Zeitschlitzes und legt die Schalter an den zugehörigen Empfangsleitungen auf den Besetztzeichengenerator um. Während die Teilnehmerstationen A und B nun über die betreffenden Zeitschlitze ihre Nachrichten austauschen, können also alle anderen Teilnehmerstationen in diesen Zeitschlitzen keine Signale in den zentralen Sternkoppler absetzen, die bestehende Verbindung also in keiner Weise stören. Sie können die für sie nicht bestimmten Nachrichten auch nicht auswerten, vielmehr erhalten sie an deren Stelle durch das Besetztzeichen die Information, daß es zwecklos ist, auf diese Zeitschlitze zugreifen zu wollen.

Eine Störung, für die eine noch unbekannte Teilnehmerstation der Urheber ist, läßt sich leicht dadurch lokalisieren, daß entweder zunächst alle Sendeleitungsschalter geöffnet und einzeln nacheinander wieder geschlossen oder einzeln nacheinander geöffnet werden, bis der Urheber entdeckt ist. Die Teilnehmerstation, der die Störquelle zugeordnet worden ist, wird bis zur Beseitigung der Störquelle vom Sendebetrieb ausgeschlossen, d.h. ihr Sendeleitungsschalter bleibt solange geöffnet.

Für Datenverkehr, bei dem nur eine Teilnehmerstation sendet und eine andere empfängt, kann übrigens nach abgeschlossener Signalisierung der zweite Zeitschlitz wieder freigegeben werden. Auch diese Tatsache ist hinsichtlich der gewünschten Transparenz für Ausführungsformen der Erfindung von Bedeutung.

In diesem Zusammenhang ist darauf hinzuweisen, daß zweckmäßig auch hier          optische  Schalter  in  LiNbO$_3$-
Technik, vorzugsweise zusammen mit einem zentralen optischen
Sternkoppler als integriertes Bauteil, ausgebildet
werden.

Wie für Kommunikationssysteme, insbesondere Lokale
Kommunikationssysteme allgemein bekannt und gebräuchlich, ist es auch für Ausführungsformen der Erfindung
sinnvoll und vorteilhaft, eine als Überleiteinrichtung
zu einem anderen, insbesondere öffentlichen Netz sowie
eine für Überwachungs-, Steuerungs- und insbesondere
Gebührenerfassungsaufgaben ausgebildete Station vorzusehen. Diese Stationen sollten sich möglichst an zentraler Stelle, also zusammen mit dem Sternkoppler und
Koppelfeldern für Breitbanddienste, an einem gemeinsamen Ort befinden.

In der Zeichnung sind schematisch Ausführungsformen der
Erfindung dargestellt. Dabei zeigen:

Fig. 1: ein Prinzipschaltbild für ein Lokales Kommunikationssystem - LKS - mit Sternnetz und
        optischen und/oder elektrischen Kanälen;
Fig. 2: ein Blockschaltbild einer vereinfachten
        Sternkopplerstelle für schnelle Durchschaltevermittlung bei Schmalbanddiensten und
        schnellem Datenverkehr;
Fig. 3: ein Schaubild für Aufbau und Organisation
        eines Zeitrahmens für das TDMA-System mit
        einigen detaillierten Beispielen für dessen Zeitschlitze;
Fig. 4: ein Schaubild zur Erläuterung der Funktion einer Synchronisierungs-Einstellung/
        Überwachung;

Fig. 5: ein Schaubild zur Erläuterung der Funktion der Schaltstellungen von Schaltern an einem Sternkoppler in einem LKS gemäß Fig. 1 und der Zugriffsmöglichkeiten auf Schmalband- und schnelle Datenkanäle;

Fig. 6: eine Prinzipskizze für einen elektrischen Sternkoppler;

und Fig. 7: ein Blockschaltbild mit den wesentlichen Bestandteilen, die für eine Punkt-zu-Punkt-Verbindung in nur einer Übertragungsrichtung in einem LKS benötigt werden.

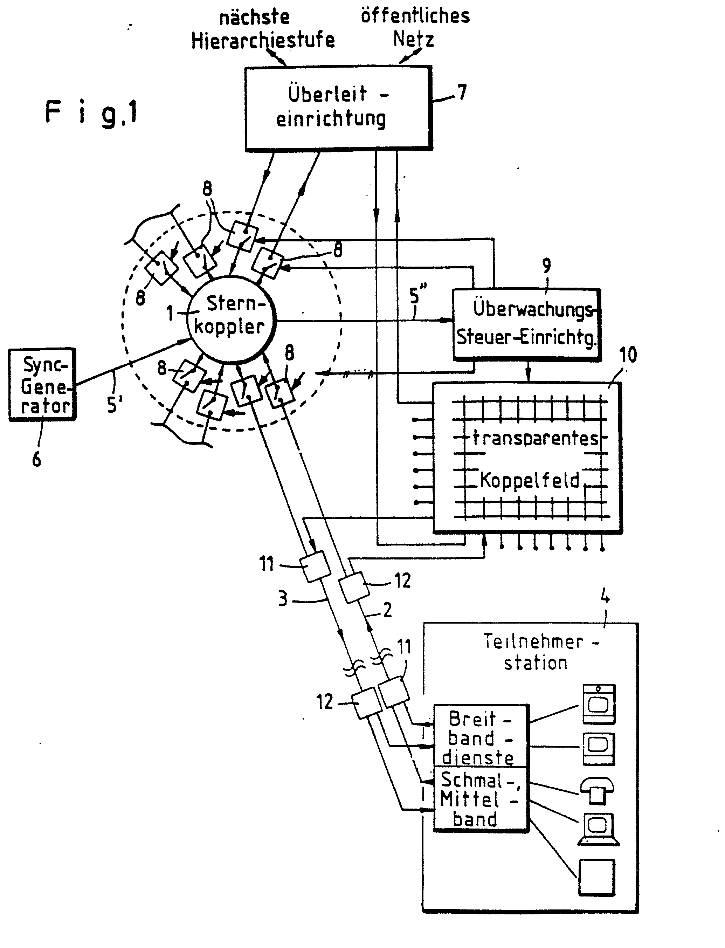

Wie Fig. 1 erkennen läßt, ist wesentliches Kernstück eines Lokalen Kommunikationssystems LKS mit optischen und/oder elektrischen Kanälen gemäß der Erfindung ein Sternkoppler 1. An ihm sind über getrennte Sendeleiter 2 und Empfangsleiter 3 die einzelnen Teilnehmerstationen 4 angeschlossen. Direkt in den Sternkoppler 1 wird über eine eigene Sendeleitung 5' von einem Synchronisierzeichen-Generator 6 ein leerer Zeitrahmen eingespeist. Er wird an alle Teilnehmerstationen 4 verteilt und gilt als gemeinsame Referenz für das Zeitmultiplexsystem. Dieser Teil des Systems mit optischen oder elektrischen Kanälen ist mit schneller Leitungsvermittlung für die Abwicklung von Schmal- und Mittelband-Diensten ausgelegt, also entweder weitgehend mit optischen oder ausschließlich mit elektrischen Komponenten aufgebaut.

Zur Verhinderung eines unbefugten Zugriffs auf Zeitschlitze sind zwischen dem Sternkoppler 1 und den Sende- und Empfangsleitern 2, 3, die zu den einzelnen Teilnehmerstationen 4 sowie zu einer Überleiteinrichtung 7 führen, Schalter 8 vorgesehen. Diese werden, entsprechend dem Belegungszustand der einzelnen Zeitschlitze für die verschiedenen Verbindungen von einer Überwachungs- und Steuer-Einrichtung 9 gesteuert. Die betreffenden Informationen bezieht die Überwachungs- und Steuereinrichtung 9 über eine individuelle Empfangsleitung 5'' vom Sternkoppler 1, ähnlich wie ein Empfangsteil einer Teilnehmerstation bzw. der Überleiteinrichtung 7, und wertet diese nach Art einer Vermittlungssteuerung aus.

Für Breitbanddienste, die als solche ebenfalls in Form optischer oder elektrischer Kanäle und getrennt von den Schmal- und Mittelbanddiensten übermittelt werden, sind entsprechende Komponenten für eine getrennte Führung vorgesehen. Hierbei handelt es sich beispielsweise um Frequenzumsetzer an den Enden von Koaxialkabeln oder dergleichen für die Teilnehmeranschlußleitungen oder um elektro-optische bzw. opto-elektrische Wandler und gegebenenfalls Multiplexer/Demultiplexer sowie faseroptische Anschlußleitungen. Außer einer Realisierung mit Wellenlängenmultiplex sind beispielsweise auch weitere getrennte Sende- und Empfangsleiter in den Teilnehmeranschlußleitungen möglich. Während die Signalisierung für Breitbanddienste mit optischen oder elektrischen Kanälen auf jeden Fall im Bereich des Sternkoppler-TDMA-Systems abgewickelt wird, erfolgt die Durchschaltung von Breitbanddiensten in einem elektrischen bzw. optischen Breitband-Koppelfeld 10.

Das erfindungsgemäße System ist transparent in dem Sinne, daß bis auf die Länge (Dauer) eines Zeitschlitzes keine weiteren Vorgaben bezüglich Art und Struktur der Daten, Modulation, Kodierung usw. gemacht werden. Im Breitbandbereich entfällt darüber hinaus die Festlegung auf eine Zeitschlitzlänge. Die Breitbanddienste können auch als analoge Signale übertragen und in dem transparenten Breitband-Koppelfeld 10 durchgeschaltet werden.

Das Netz hat Sternstruktur. Es ist hinsichtlich der erforderlichen Bandbreiten für die unterschiedlichen Dienste in zwei Subsysteme untergliedert. Signalisierungen, Schmalbanddienste und schneller Datenverkehr werden z. B. als elektrische Signale im Basisband oder als optische Signale über eine erste Lichtwellenlänge $\lambda_1$ im einen, Breitbanddienste z. B. im VHF- oder UHF-Bereich oder über mindestens eine andere Lichtwellenlänge $\lambda_2$ im anderen Subsystem abgewickelt. Dem entsprechend befinden sich an den Teilnehmeranschlußleitungen mit rein elektrischen, rein optischen oder hybriden elektrisch-optischen Sendeleitern 1 und Empfangsleitern 2 Leitungsanpassungseinheiten 11 bzw. 12. Im Subsystem für Schmalbanddienste und schnellen Datenverkehr werden die Kanäle nach dem Prinzip der dezentralen Vermittlung, im Subsystem für Breitbanddienste nach dem Prinzip der zentralen Vermittlung durchgeschaltet.

Für ein Koppelfeld 10 zur Breitband-Vermittlung können für Signale im elektrischen Bereich elektronische Gatterschaltungen und für Signale im optischen Bereich Matrizen verwendet werden, die aus optischen $LiNbO_3$-Schaltern aufgebaut sind. Ein Vorteil der optischen Vermittlung ist die Bitratenunabhängigkeit für die übermittelten Daten, was insbesondere der für ein LKS erforderlichen Flexibilität entgegenkommt, d. h., für die Teilnehmer sind in diesem System verschiedene

Breitbanddienste gleichzeitig möglich. Beispielsweise können jeweils ein Paar oder eine Gruppe von Teilnehmern 4 an einem Dienst "hochaufgelöstes Fernsehen" (high definition television - HDTV), andere am Dienst "Bildtelefon", hierbei entweder mit herkömmlichem Standard, mit TV-Qualität, mit Studio-Qualität, usw. teilnehmen.

Obwohl sich die verschiedensten Dienstekategorien definieren lassen und entweder dem einen oder dem anderen Subsystem zuordnen lassen würden, sind Übereinstimmungen oder zumindest Ähnlichkeiten in Teilaspekten in so großem Umfang vorhanden, daß hierdurch eine Verknüpfung und eine gewisse Abhängigkeit eines Subsystems vom anderen, d. h. also ein integriertes LKS gemäß der Erfindung sinnvoll ist. Da Schmal- und Breitbanddienste stark unterschiedliche Übertragungsbandbreite erfordern, wird hierfür allerdings kein gemeinsames Zeitmultiplexsystem vorgesehen. Dies würde einen unangemessen hohen Aufwand bezüglich der Schmalbanddienste verursachen und zudem infolge einer dazu notwendigen leistungsintensiven, schnellen Elektronik einen Notbetrieb für Schmalbanddienste bei Ausfall der Spannungsversorgung praktisch unmöglich machen.

Das Zeitmultiplexsystem mit wahlfreiem Zugriff (TDMA-System) im Subsystem für Schmalbanddienste und schnellen Datenverkehr ermöglicht einen schnellen Aufbau von Punkt-zu-Punkt-Verbindungen in einer Aufbauzeit von weniger als 5 msec. Hierdurch ist der Vorteil einer effektiven Kanalausnutzung begründet. Die Kanäle brauchen nämlich praktisch nur für die Dauer eines Datentransfers und deshalb jeweils für verhältnismäßig kurze Zeit belegt zu werden. Es ist auch eine hohe Sicherheit bei Datenverkehr gegeben, da Kollisionen nur während der sehr kurzen Phase des Verbindungsaufbaus, nicht jedoch während der sich daran anschließenden Phase der Datenübertragung, auftreten können. Im Vergleich zu anderen Datentransfersystemen kann damit bei Ausführungsformen der Erfindung auch Redundanz zur Markierung, Sicherung etc. entfallen.

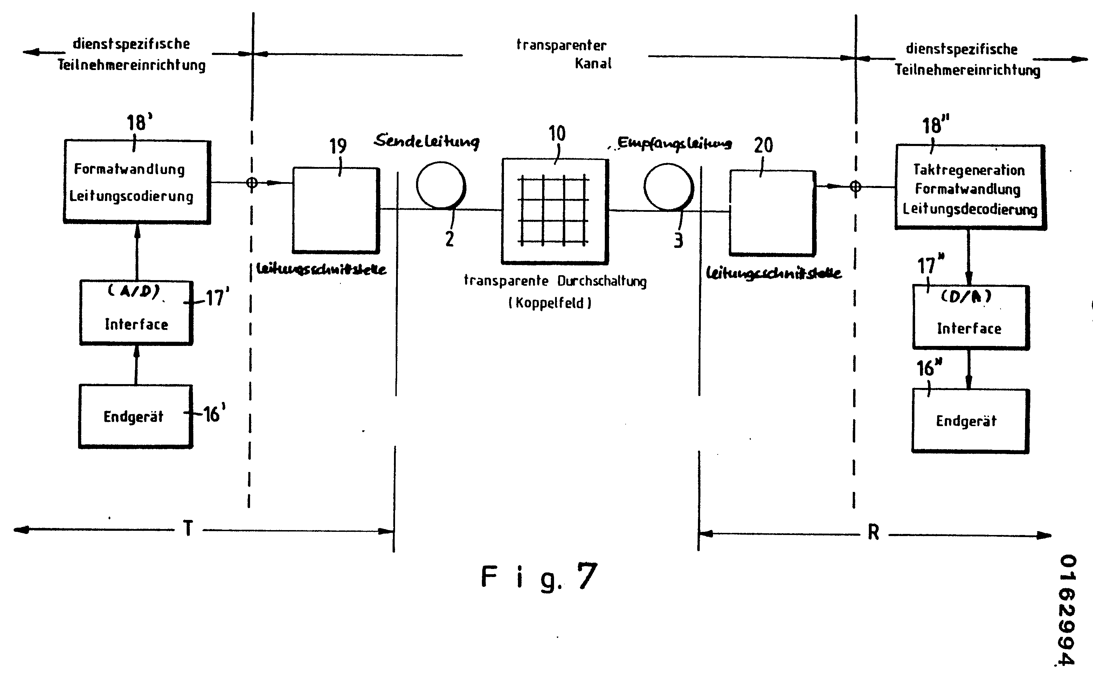

Im Hinblick auf die Entwicklung optischer Nachrichtensysteme befassen sich die Auführungsformen der Erfindung insbesondere mit Verfahren und Einrichtungen, mit denen auch die Vermittlung der Signale auf optischem Wege durchzuführen ist. Wenn nämlich die Übertragung der Signale ausschließlich auf optischem Wege erfolgt, sind im wesentlichen nur bei den Teilnehmerstationen 4 elektro-optische bzw. opto-elektrische Wandler 19, 20 (vgl. Fig. 7) erforderlich. Bei zentralen Einrichtungen, insbesondere für die Steuerung von Vermittlungsstellen, sowie an Übergängen in andere, insbesondere öffentliche Netze, sind derartige Wandler natürlich ebenfalls erforderlich. Funktionselemente in einem LKS zur Signalregeneration, Verstärkung etc. von Signalen sollten außerhalb von Teilnehmerstationen 4 nach Möglichkeit entfallen können oder ebenfalls auf optischer Signalverarbeitung beruhen. Hierdurch ergeben sich insbesondere für die Vermittlung von Breitbandkanälen erheblich günstigere Lösungen als bei Vermittlung solcher Signale auf elektrischem Wege.

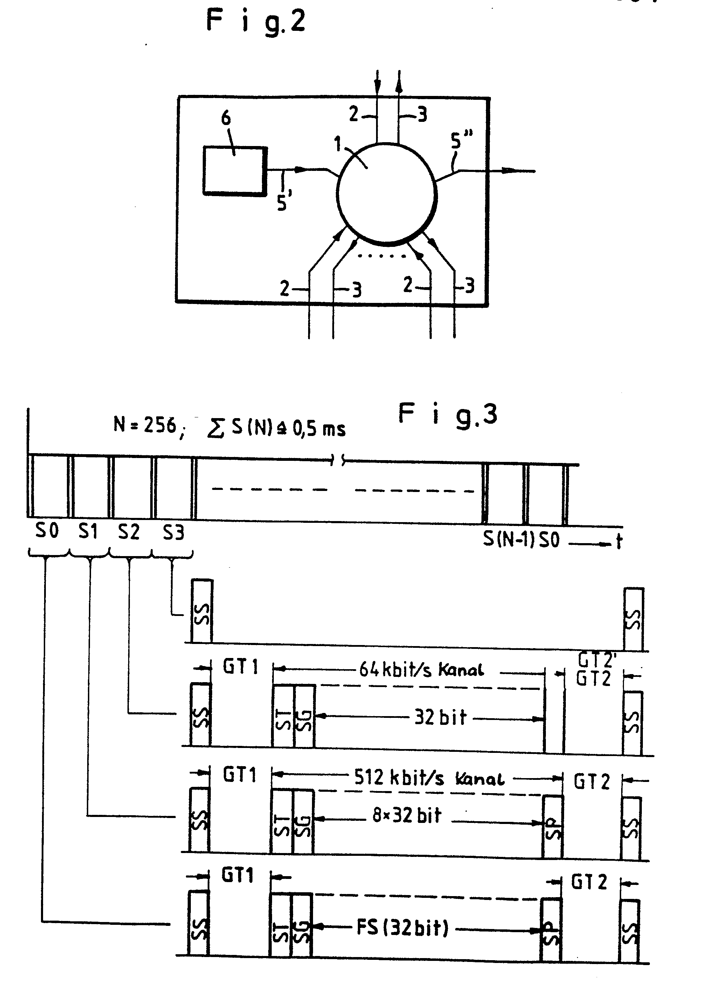

Der Einsatz von optischen $LiNbO_3$-Schaltern setzt insgesamt Monomode-Technik, auch für die Übertragungsleitungen 2, 3 also Monomodefasern voraus. Ein auch für elektrische Kanäle sowie auch für optische Kanäle mit Multimode-Technik geeignetes LKS, bei dem am zentralen Sternkoppler 1 auf Schalter 8 an den Anschlüssen der Sendeleiter 2 und Empfangsleiter 3 verzichtet wird, kann mit einer Vermittlungsstelle für Schmalbanddienste gemäß Fig. 2, ansonsten entsprechend Fig. 1, aufgebaut werden. An den elektrischen bzw. optischen Sternkoppler 1 sind dann die einzelnen Teilnehmeranschlußleitungen 2, 3 sowie über die Sendeleitung 5' der Synchronisierzeichen-Generator 6, auch eine Empfangsleitung 5'', die zur Steuereinrichtung 9 eines Breitbandkoppelfeldes führt, und Sende- und Empfangsleiter 2, 3 für die Überleiteinrichtung 7, direkt angeschlossen. Bei dieser Ausführungsform läßt sich allerdings nicht mehr die Abhör- und Ausfallsicherheit so leicht gewährleisten wie bei einer Ausführungsform, die vollständig Fig. 1 entspricht. Selbstverständlich kann auch eine Ausführungsform gemäß Fig. 2 mit optischen Kanälen in Monomode-Technik aufgebaut sein.

Optische Koppelfelder 10 für öffentliche Netze mit entsprechend großer Teilnehmerzahl lassen sich nach dem derzeitigen Stand der Entwicklung in Lithium-Niobat-Technik noch nicht realisieren. Substrate in herkömmlicher Größe (2-Zoll-Wafer) erlauben nur eine Kaskadierung von fünf Ebenen aus $LiNbO_3$-Schaltern auf Richtkopplerbasis und geben somit die maximale Größe einer Schaltmatrix, z. B. 4 x 4- oder 3 x 5-Matrizen, vor.

Ein weiterer Grund, der einen Einsatz von $LiNbO_3$-Komponenten in komplexen Koppelfeldern derzeit noch erschwert, ist die vergleichsweise hohe Durchgangsdämpfung einer einzelnen bekannten Schaltmatrix. Für die oben erwähnte, bekannte 4 x 4-Matrix werden 6,25 dB Durchgangsverlust angegeben. Die Kaskadierbarkeit derartiger Koppelmatrizen ist damit auf maximal 6 Stufen beschränkt. Blockierungsfreie "Clos'sche" optische Koppelfelder der Größe 36 x 36 sind also durchaus realisierbar. Mittels Konzentration und Expansion und einer Inkaufnahme der dadurch begründeten Blockierungen können immerhin rund 100 Teilnehmerstationen 4 an ein solches optisches Koppelfeld 10 in einem LKS angeschlossen werden.

In Fig. 3 ist zur näheren Erläuterung des Zeitmultiplex-Systems mit wahlfreiem Zugriff - TDMA-System - die Folge von Zeitschlitzen SO, ..., S(N-1) eines Zeitrahmens sowie der Aufbau einzelner Zeitschlitze in diesem Zeitrahmen anhand von vier Beispielen dargestellt. Ein solches TDMA-System herrscht in dem "Subsystem" für Schmalbanddienste und schnellen Datenverkehr, und beinhaltet auch die Signalisierung für alle im LKS abwickelbaren Dienste, also auch die Signalisierung für Breitbanddienste.

Bei einem Rahmentakt entsprechend 2 kHz und N = 256 Zeitschlitzen pro Rahmen hat jeder Zeitschlitz die Dauer von

$$\frac{0,5 \text{ msec}}{256} = 1,953125 \text{ } \mu\text{sec}.$$

Ausgehend von einer Bitrate - brutto - von 48 bit pro Zeitschlitz und einer Nutzbitrate von 32 bit pro Zeitschlitz, die auch in der Signalisierungsphase zumindest zu Beginn aller abwickelbaren Dienste zugrundegelegt wird, sowie einem Synchronisierbit SS zur Kennzeichnung des Beginns eines Zeitschlitzes, einem Startbit ST zur Kennzeichnung des Nutzbereichs und einem direkt darauf folgenden Signalisierungsbit SG zur Kennzeichnung einer Signalisierung im Nutzbereich, verbleibt pro Zeitschlitz netto die Dauer entsprechend 13 bit = 0,529 µsec, im Falle eines Stop-bits SP von ca. 41 nsec am Ende des Nutzbereichs entsprechend 12 bit = 0,488 µsec. Zur Verwendung als Schutzzone GT, die jeweils auf Beginn und Ende eines Zeitschlitzes in GT1 und GT2 aufgeteilt werden kann,ist der maximale Toleranzbereich vorgegeben, innerhalb dessen eine Nachricht oder Signalisierung im Zeitschlitz zeitlich in beiden Richtungen verschiebbar ist, ohne die Information eines benachbarten Zeitschlitzes zu zerstören. Innerhalb des Nutzbereichs (und zwar nur dort), der in jedem der 256 Zeitschlitze die Dauer von 1,302 µsec hat, können z. B. für einen 64 kbit/sec-Kanal 32 bit zu je ca. 41 nsec, für einen 512 kbit/sec-Kanal 8 x 32 bit zu je ca. 5 nsec untergebracht werden.

Im Zeitschlitz SO eines jeden Zeitrahmens befindet sich das Rahmen-Synchronisierzeichen FS, dessen 32 bit einem fest für das System vereinbarten Muster entsprechen. Dabei nimmt das davor befindliche Signalisierungsbit SG auf jeden Fall den Zustand für Signalisierung ein. Sofern das Ende des Nutzbereiches noch durch ein Stop-bit SP markiert wird, kann auch dieses als zum Muster des Rahmen-Synchronisierzeichens FS gehörend angesehen werden. Dies gilt gleichfalls für das Startbit ST, so daß für das Muster dieses Zeichens FS praktisch insgesamt 35 bit zur Verfügung stehen. Der Synchronisierzeichen-Generator 6 - vgl. Fig. 1 - setzt dieses Rahmen-Synchronisierzeichen FS zeitlich so in den Sternkoppler 1 ab, daß die Schutzzonen GT1 und GT2 am Anfang und am Ende des Zeitschlitzes SO z. B. gleich lang sind.

Für einen Zeitschlitz S1 ist der Aufbau als Beispiel für einen 512 kbit/s-Kanal dargestellt, für einen Zeitschlitz S2 hingegen für einen 64 kbit/s-Kanal. Dort ist zudem der zeitliche Bereich am Ende des Nutzbereichs, in dem sich bei Zeitschlitz S0 und S1 das Stopbit SP befindet, offen dargestellt. Dies soll bedeuten, daß das Stopbit auch entfallen darf.

Schließlich ist als Beispiel der Zeitschlitz S3 als leerer oder freier Zeitschlitz dargestellt. Dies ist für eine Teilnehmerstation, die auf diesen Zeitschlitz zugreifen will, erst nach Ablauf der Gesamtdauer GT für die Schutzzonen sicher erkennbar. Sollte eine andere Teilnehmerstation zur selben Zeit, d. h. während der betreffende Zeitrahmen im System herrscht, ebenfalls auf diesen freien Zeitschlitz S3 zugreifen, entsteht im Sternkoppler 1 ein undefinierbarer Zeitschlitzinhalt. Aufgrund einer solchen Kollision werden die betreffenden Teilnehmerstationen den Versuch, diesen Zeitschlitz für sich zu belegen, aufgeben und den Aufbau einer gewünschten Verbindung erneut in einem anderen Zeitschlitz versuchen. Diese Vorgehensweise ist sinnvoll und durchaus zumutbar.

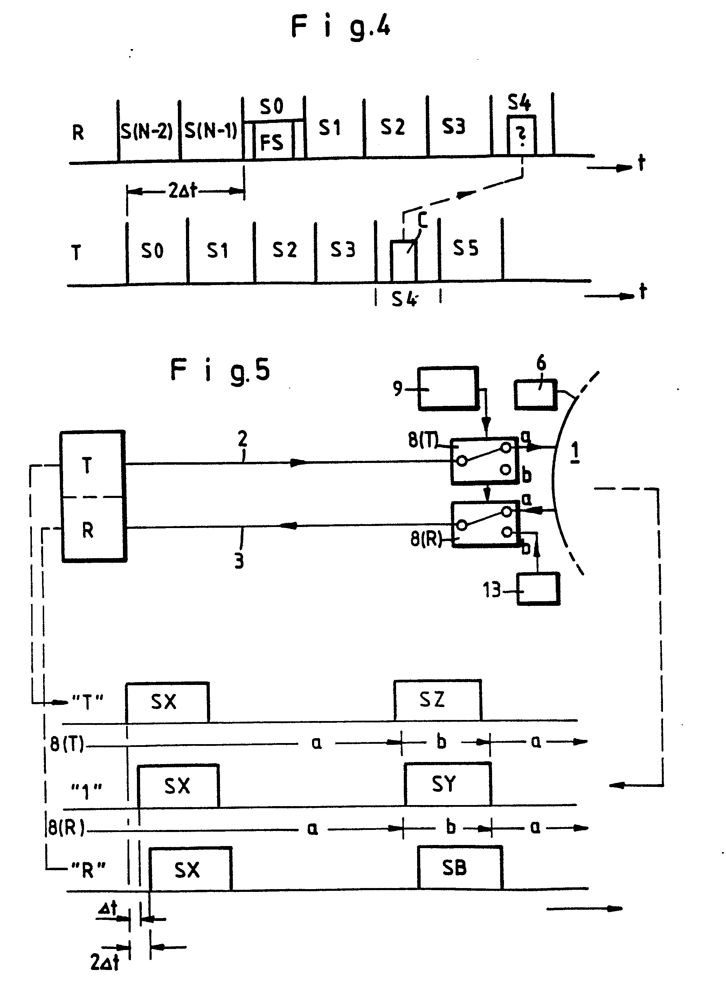

Anhand der Fig. 4, in der in zwei Zeilen Ausschnitte des bei einer Teilnehmerstation 4 herrschenden Zeitrahmens gemäß Fig. 3 dargestellt sind, wird nun der Ablauf einer Synchronisation einer Teilnehmerstation auf diesen Zeitrahmen erläutert. In der oberen Zeile R ist über der Zeit t aufgetragen, wann auf der Empfangsseite R der Teilnehmerstation welcher Zeitschlitz - S0, ... S(N-1) - detektiert wird. Um im Sternkoppler den Synchronismus zu erreichen, muß die Sendeseite T früher beginnen. In der zweiten Zeile T ist diese Differenz $2\Delta t$ gegenüber der Zeile R angegeben. Sie wird bei der Installation der Teilnehmerstation ermittelt und entsprechend eingestellt. Infolge Temperaturschwankungen oder dergleichen kann sich die Laufzeit jedoch etwas ändern. Von der Sendeseite wird deshalb z. B. im Zeitschlitz S4 ein Prüfwort C ausgesendet, das in derselben Teilnehmerstation ebenfalls im Zeitschlitz 4 der Zeile R, also auf der Empfangsseite, erwartet wird. Dies ist in Fig. 4 im Zeitschlitz S4 der Zeile R durch ein Fragezeichen "?" dargestellt. Trifft dort das Prüfwort C nicht innerhalb des zugelassenen Nutzbereichs des Zeitschlitzes S4 ein, so muß nur der Sendezeitpunkt auf der Sendeseite der Teilnehmerstation entsprechend verschoben werden. Um eventuelle Kollisionen während eines solchen Synchronisierungsvorganges zu vermeiden, kann das Prüfwort C, einschließlich Startbit ST und Signalisierungsbit SG, kürzer als der eigentliche Nutzbereich eines Zeitschlitzes sein und von vornherein etwas später als sonstige Information (Signalisierung, Nachrichten) ausgesendet werden. D. h., die Schutzzone GT wird bei Prüfung des Synchronismus entsprechend länger und bietet dadurch die notwendige Sicherheit.

Die Fig. 5 zeigt für den Anschluß einer Teilnehmerstation 4, hier nur grob in Empfangsteil R und Sendeteil T untergliedert, über den Sendeleiter 2 und den Empfangsleiter 3 sowie die entsprechend bezeichneten Schalter 8(R), 8(T) an den Sternkoppler 1 das darunter dargestellte Zeitdiagramm für die Zustände im Sendeteil T der Teilnehmerstation 4, im Sternkoppler 1 und im Empfangsteil R der Teilnehmerstation 4. Ein Zeitschlitz SX, der vom Sendeteil T ausgesendet wird, befindet sich um die

Laufzeit Δt verschoben im Sternkoppler 1, nochmals um die Laufzeit Δt verschoben im Empfangsteil R derselben Teilnehmerstation (auch - wenn hier nicht dargestellt - beim anderen Teilnehmer). Während dieser Zeit befinden sich die Schalter 8(R), 8(T) in Stellung a. In einem späteren Zeitschlitz SZ setzt dieselbe Teilnehmerstation eine weitere Nachricht ab. Im Sternkoppler 1 ist diese Zeitlage jedoch bereits für eine andere Verbindung, an der dieser Teilnehmer nicht beteiligt ist, mit einem Zeitschlitz SY belegt. Die Steuerung 9 hat deshalb für diese Zeitdauer die Schalter 8(R), 8(T) in Stellung b umgeschaltet. Der Schalter 8(R) ist in der Stellung b an einen Besetztzeichen-Generator 13 angeschlossen, so daß die hier betrachtete Teilnehmerstation in dieser Zeitlage weder ihren ausgesendeten Zeitschlitz SZ noch den "fremden" Zeitschlitz SY, sondern einen mit einem Besetztzeichen versehenen Zeitschlitz SB empfängt. In Richtung von den Teilnehmerstationen zum Sternkoppler werden also vom Schalter 8(T) Störungen des Systems ferngehalten, in Richtung vom Sternkoppler zu Teilnehmerstationen vom Schalter 8(R) unberechtigtes Mithören verhindert. Infolge des in dieser Zeitlage empfangenen Besetztzeichens SB kann zudem die Teilnehmerstation das weitere Aussenden von Zeitschlitzen SZ in dieser Zeitlage abstellen.

Die Schalter 8(R) und 8(T) befinden sich in der Ruhelage in Stellung a. Das bedeutet, das System bleibt als solches funktionsfähig, wenn die Steuerung der Schalter 8(R), 8(T) oder dgl. ausfällt. Sie werden nur in Stellung b geschaltet, wenn zum betreffenden Zeitpunkt die zugehörige Teilnehmerstation nicht auf einen Zeitschlitz zugreifen soll oder darf.

Wird ein Schalter 8(R) kurz nach Beginn des Nutzinhalts eines Zeitschlitzes für nichtberechtigte Teilnehmerstationen von Stellung a in Stellung b gebracht, kann dort diese Nachricht praktisch nicht identifiziert werden, da sie zu stark verstümmelt ist. Damit ist also die Abhörsicherheit noch immer ausreichend gewährleistet. Ein Aufschalten eines Besetztzeichens ist nicht erforderlich, der Kanal wird dennoch als besetzt erkannt.

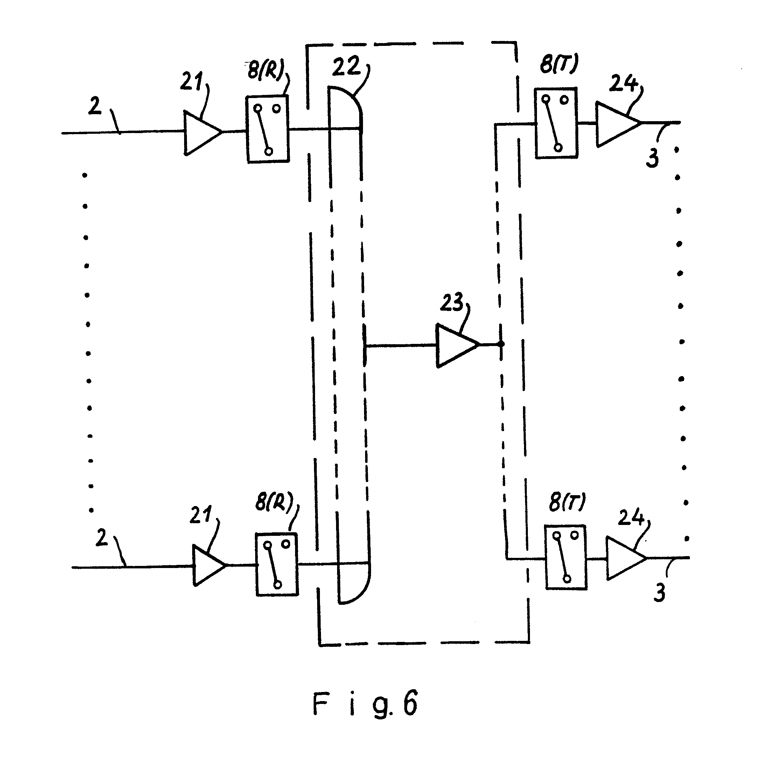

In Fig. 6 ist für den Schmal- und Mittelbandbereich, d. h. das TDMA-System eines LKS mit elektrischen Kanälen, ein "elektronischer Sternkoppler" schematisch dargestellt. Die ankommenden Sendeleitungen 2 führen, gegebenenfalls über Empfangsverstärker 21 und Schalter 8(R) an ein ODER-Gatter 22, das aus zusammengeschalteten, kleineren Gatterelementen aufgebaut sein kann. Alle Eingänge werden also auf einen gemeinsamen Gatterausgang und von dort, gegebenenfalls über einen Zwischenverstärker 23, auf die parallel angeschlossenen Empfangsleitungen 3 geführt. Auch hier sind gegebenenfalls Schalter 8(T) sowie Sendeverstärker/Treiber 24 für jede der Empfangsleitungen 3 vorgesehen. Der gestrichelt eingerahmte Teil entspricht bezüglich seiner Funktion dem Sternkoppler 1 in Fig. 1. Die Funktion eines derartigen Sternkopplers 1 für optische Kanäle ist in der eingangs erwähnten älteren Anmeldung EP 84 730 052.2 erläutert.

Die Fig. 7 zeigt für nur eine Übertragungsrichtung, da die andere identisch damit ist, die wichtigsten erforderlichen Einrichtungen für einen transparenten elektrischen oder optischen Kanal eines LKS gemäß der Erfindung. Transparenter Kanal heißt hier, die Einrichtungen zwischen den Leitungsschnittstellen 19 und 20 verhalten sich bezüglich der Übertragung wie eine einzelne Leitung. Von einem Endgerät 16', z. B. einer Kamera, wird das abgegebene elektrische Signal einem Interface 17', z. B. auch zur Analog/Digital-Wandlung zugeführt. Daran schließt sich ein elektronisches Gerät 18', z. B. zur Formatwandlung des Digitalsignals und zur Leitungscodierung an. Diese Einrichtungen sind dienstespezifisch ausgebildet. Zur Sendeseite T der Teilnehmereinrichtungen einerseits, bereits zum transparenten elektrischen bzw. optischen Kanal andererseits gehört eine Leitungsschnittstelle 19, im Falle optischer Kanäle also ein elektro-optischer Wandler, z. B. ein Laser, dem das vom Gerät 18' kommende Ausgangssignal zugeführt wird und der ein entsprechendes elektrisches bzw. optisches Signal in den Sendeleiter 2 einspeist. Von dort gelangt dieses Signal in das Koppelfeld 10 und wird dort auf den Empfangsleiter 3 durchgeschaltet, der zur Partner-Teilnehmerstation führt. Dort wird in der einerseits bereits zum Empfangsteil R, andererseits noch zum transparenten elektrischen bzw. optischen Kanal gehörenden Leitungsschnittstelle 20, im Falle optischer Kanäle also ein opto-elektrischer Wandler, z. B. einer Photodiode, das empfangene Signal als elektrisches Signal einem elektronischen Gerät 18'' zugeführt, wo auch eine Taktregeneration sowie die zum Gerät 18' reziproken Vorgänge – Formatwandlung, Leitungsdecodierung – stattfinden. Danach wird das Signal in einem Interface 17'' wiederum einem zum Interface 17' reziproken Vorgang unterzogen und schließlich dem Endgerät 16'', z. B. einem Monitor, zugeführt. Auch hier sind die Einrichtungen 16'', 17'' und 18'' dienstespezifisch ausgebildet.

HEINRICH-HERTZ-INSTITUT FÜR NACHRICHTENTECHNIK BERLIN
GMBH                                                    01/0584 EP

Patentansprüche

1. Lokales Kommunikationssystem (LKS) mit einem Sternnetz für ein vollsynchrones Zeitmultiplexsystem mit
wahlfreiem Zugriff (TDMA-System) und einer maximalen
Datenrate bis in den Gbit/s-Bereich für die integrierte Abwicklung mit schneller Leitungsvermittlung
von unterschiedlichen Diensten, d. h. Schmalbanddiensten mit einem Bandbreitenbedarf bis 64 kbit/s und Mittelbanddiensten mit einem Bandbreitenbedarf weit über
64 kbit/s, sowie gegebenenfalls zumindest einer schmalbandigen Signalisierung bei Breitbanddiensten,
g e k e n n z e i c h n e t   d u r c h
optische und/oder elektrische Kanäle, für die für jede
Teilnehmerstation (4) für die Sende- und die Empfangsrichtung getrennte, in einem zentralen Sternkoppler (1)
zusammengeführte Anschlußleitungen (2,3) vorgesehen
sind und die Teilnehmerstationen (4) solche Komponenten
enthalten, die für den Zugriff auf einen Kanal benötigt
werden.

2. Lokales Kommunikationssystem nach Anspruch 1, gekennzeichnet durch einen Synchronisierzeichen-Generator
(6), der einen leeren Zeitmultiplexrahmen erzeugt und
diesen über eine Sendeleitung (5') in den zentralen
Sternkoppler (1) einspeist.

3. Lokales Kommunikationssystem nach Anspruch 1 oder 2,
gekennzeichnet durch Zeitschlitze des Zeitmultiplexrahmens mit Schutzzonen (GT1, GT2) am Anfang und am Ende
eines Zeitschlitzes.

4. Lokales Kommunikationssystem nach einem der Ansprüche 1 bis 3, gekennzeichnet durch eine beliebig wählbare Bitrate innerhalb des Nutzbereichs eines Zeitschlitzes.

5. Lokales Kommunikationssystem nach einem der Ansprüche 1 bis 3, gekennzeichnet durch einen Kanal erhöhter, aus mehreren Zeitschlitzen innerhalb eines Rahmens gebildeter Datenrate.

6. Lokales Kommunikationssystem nach einem der Ansprüche 1 bis 5, gekennzeichnet durch ein eigenes transparentes Koppelfeld (10) mit einer reinen Raumstufe für die Durchschaltung von Breitbanddiensten, an das für jede Teilnehmerstation (4) für die Sende- und die Empfangsrichtung getrennte Anschlußleitungen (2,3) angeschlossen sind.

7. Lokales Kommunikationssystem nach Anspruch 6, gekennzeichnet durch optische Schalter in LiNbO$_3$-Technik, aus denen das Koppelfeld (10) für die Durchschaltung der Breitbanddienste aufgebaut ist.

8. Lokales Kommunikationssystem nach einem der Ansprüche 1 bis 7, gekennzeichnet durch Schalter (8) an den Anschlußleitungen (2,3) für die Sende- und die Empfangsrichtung am zentralen Sternkoppler (1) und durch eine als Überwachungseinrichtung (9) für den Belegungszustand der Kanäle ausgebildete Station, die die Schalter (8) dem Belegungszustand entsprechend steuert.

9. Lokales Kommunikationssystem nach einem der Ansprüche 1 bis 8, gekennzeichnet durch eine als Überleiteinrichtung (7) zu einem anderen, insbesondere öffentlichen Netz ausgebildete Station.

10. Lokales Kommunikationssystem nach einem der Ansprüche 1 bis 9, gekennzeichnet durch eine für Überwachungs-, Überleit-, Steuer- und insbesondere Gebührenerfassungsaufgaben ausgebildete Station.

Fig.1

1/5   0162994

Fig.2

Fig.3

$N = 256$; $\sum S(N) \triangleq 0,5\ ms$

S0  S1  S2  S3                          S(N-1) S0 ——— t

SS

SS                                      GT2'
GT1 ←——— 64 kbit/s Kanal ———→          GT2
ST SG ←——— 32 bit ———→

GT1 ←——— 512 kbit/s Kanal ———→         GT2
SS  ST SG ←——— 8×32 bit ———→    SP     SS

GT1                                     GT2
SS  ST SG ——→ FS (32 bit) ——→   SP     SS

0162994

# Fig.4

# Fig.5

0162994

F i g. 6

dienstspezifische
Teilnehmereinrichtung

transparenter
Kanal

dienstspezifische
Teilnehmereinrichtung

**18'**

Formatwandlung

Leitungscodierung

19

Sendeleitung

**10**

Empfangsleitung

20

**18"**

Taktregeneration
Formatwandlung
Leitungsdecodierung

Leitungsschnittstelle

2

transparente Durchschaltung
(Koppelfeld)

3

Leitungsschnittstelle

(A/D)

Interface

17'

17"

(D/A)

Interface

Endgerät

16'

16"

Endgerät

T

R

# F i g. 7

0162994

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | IEEE COMMUNICATIONS MAGAZINE, Band 20, Nr. 1, 1982, Seiten 44-51, IEEE, Piscataway, US; L.A. BAXTER u.a.: "A comparison of architectural alternatives for local voice/data communications" * Seite 47, rechte Spalte, Zeile 16 - Seite 48, rechte Spalte, Zeile 20 * | 1-2 | H 04 B 9/00 H 04 Q 11/04 H 04 Q 3/52 H 04 L 11/16 |
| | --- | | |
| Y | NACHRICHTENTECHNISCHE ZEITSCHRIFT, Band 27, Nr. 8, 1974, Seiten 283-291, Berlin, DE; K.D. SCHENKEL: " Ein integriertes 300-Mbit/s-Zeitmultiplex-Nachrichtensystem mit dezentraler Vermittlung" * Seite 283, linke Spalte, Zeile 1 - Seite 284, linke Spalte, Zeile 46 * | 1-2 | |
| A | IDEM * Seite 285, linke Spalte, Zeilen 20-25 * | 5 | RECHERCHIERTE SACHGEBIETE (Int. Cl.4) H 04 Q H 04 B H 04 L H 04 M |
| | --- | | |
| A | DE-A-2 538 637 (FÖRDERUNGSGEMEINSCHAFT DES HEINRICH-HERTZ-INSTITUTS) * Seite 5, Zeile 5 - Seite 7, Zeile 4 * | 1-2 | |
| | ---                    -/- | | |

Der vorliegende Recherchenbericht wurde für alle Patentansprüche erstellt.

| Recherchenort DEN HAAG | Abschlußdatum der Recherche 30-01-1985 | Prüfer VANDEVENNE M.J. |
|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FREQUENZ, Band 32, Nr. 6, Juni 1978, Seiten 165-170, Berlin, DE; K. FUSSGÄNGER u.a.: "Experimentalsystem für ein integriertes Kommunikationsnetz mit optischen Kanälen" * Seite 167, linke Spalte, Zeile 40 - rechte Spalte, Zeile 35; Seite 168, rechte Spalte, Zeile 56 - Seite 169, linke Spalte, Zeile 4 * | 1-2,10 | |
| | --- | | |
| A | ICC'84, LINKS FOR THE FUTURE, IEEE INTERNATIONAL CONFERENCE ON COMMUNICATIONS, 14.-17. Mai 1984, Amsterdam, NL, Band 1, Seiten 141-144, IEEE, New York, US; J.-P. BEHR u.a.: "System concept of a PABX integrating voice and data" * Seite 141, rechte Spalte, Zeile 31 - Seite 142, rechte Spalte, Zeile 6 * | 1-2 | RECHERCHIERTE SACHGEBIETE (Int. Cl.4) |
| | --- | | |
| A | FERNMELDE-PRAXIS, Band 50, Nr. 18, 25. September 1973, Seiten 811-824, Berlin, DE; H. HERR: "Fernmeldesatellitensystem mit Zeitmultiplex und Phasenumtastung" * Seite 815, Figur 3 * | 3 | |
| | ----- | | |

Der vorliegende Recherchenbericht wurde für alle Patentansprüche erstellt.

| Recherchenort DEN HAAG | Abschlußdatum der Recherche 30-01-1985 | Prüfer VANDEVENNE M.J. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82